# EUROPÄISCHE PATENTSCHRIFT

(11) **EP 1 156 022 B1**
(45) Veröffentlichungstag und Bekanntmachung des Hinweises auf die Patenterteilung: **10.12.2003**
(21) Anmeldenummer: 00810905.0
(22) Anmeldetag: 03.10.2000
(51) Int. Cl.: C04B 28/02

(54) **Betonmischung mit erhohter Brandresistenz**
Concrete mixture with increased fire resistance
Mélange de béton à résistance au feu accrue

(30) Priorität: 17.05.2000 CH 985002000
(43) Veröffentlichungstag der Anmeldung: 21.11.2001
(73) Patentinhaber: Memarco AG, 4312 Magden (CH); Fortatech AG, 9015 St. Gallen (CH)
(72) Erfinder: Frech, Kurt, 9320 Arbon (CH); Bos, Jaap W., 4310 Rheinfelden (CH)
(74) Vertreter: Luchs, Willi

(56) Entgegenhaltungen:
- EP-A- 0 006 318
- AT-B- 394 547
- DE-A- 4 009 062
- NL-A- 8 502 007
- US-A- 5 749 961
- CHEMICAL ABSTRACTS, vol. 108, no. 20, 16. Mai 1988 (1988-05-16) Columbus, Ohio, US; abstract no. 172516n, K. KOBAYASHI, ET AL.: Seite 324; XP000157494 & JP 63 021244 A (ID.) 28. Januar 1988 (1988-01-28)

## Beschreibung

Die Erfindung bezieht sich auf eine Betonmischung mit erhöhter Brandresistenz.

Bei gewissen Bauwerken, wie insbesondere bei Verkehrstunnels oder dergleichen besteht ein Problem der Sicherheit im Brandfall. Dies betrifft nicht nur die Gefahr für Verkehrsteilnehmer, sondern im Brandfall auch Rettungskräfte, die durch herabstürzende Bauteile gefährdet sind, wenn die Tragstruktur der Tunnel- und Stollenauskleidung ihre Festigkeit verliert. Es zeigt sich, dass die bisher verwendeten Materialien hohen Temperaturen nicht standzuhalten vermögen, wie dies bei Bränden in Tunnels oder anderen Bauwerken auftreten können.

Bei einer gattungsmässigen Betonmischung gemäss der Druckschrift NL-A-8 502 007 wird Portlandzement verwendet, und zudem enthalten die angegebenen Mischungen (vgl. Beispiele I bis III) weitere Bestandteile wie Sand und gegebenenfalls noch Stahlfasern (z.B. Harex).

In der Druckschrift US-A-5,749,961 ist zwar erwähnt, dass mit dem Zumischen von Fibermaterial ein Kapillarsystem in dem Beton erzielt werden kann. Dies dient zur Verhinderung einer Absplitterung (spalling) von Beton.

Bei einer anderen Betonmischung gemäss AT-A-394 547 ist ein hydraulisch abbindbares oder gebundenes Baumaterial vorgesehen, welches Polypropylenfasern enthalten soll. Er wird hierbei erwähnt, dass damit die Feuerbeständigkeit der Konstruktion besser werden soll.

In der Druckschrift DE-A-40 09 062 ist eine Betonmischung beschrieben, die den Widerstand gegen hohe Temperaturen verbessern soll, die 300 bis 350° C erreichen sollen und dies nur über eine kurze Zeitdauer von höchstens ein paar Minuten. Dazu sind Beimischungen von granulatförmiger Hochofenschlacke und/oder von Brennstoffasche vorgesehen.

Die mit der Erfindung zu lösende Aufgabe besteht in der Schaffung einer Betonmischung für brandgefährdete Bauwerke, insbesondere Tunnel- und Stollenauskleidungen, die eine verbesserte Brandresistenz hat.

Die Erfindung besteht in der Verwendung von Kunststoff-Fasern in einer Betonmischung nach Anspruch 1, wobei zu Festkörpern gesinterte Steinkohleflugasche, Hochofenzement und ein Betonverflüssiger zur Erhöhung der Brandresistenz eingesetzt werden.

Die zur Verwendung gelangenden Kunststoff-Fasern sind vorzugsweise oberflächenvergütete, gebündelte und fibrillierte Polypropylen-Fasern und haben eine Länge von 10 - 38 mm, vorzugsweise etwa 19 mm.

Mit dieser erfindungsgemässen Betonmischung wird eine wesentlich verbesserte Brandresistenz im Vergleich zu Baumaterialien erreicht, die in an sich konventioneller Weise für Tunnel-, Stollenbauten, Sicherheitsbereiche im Untertagebau und sonstige Sicherheitsbauten verwendet werden.

Der Grund für diese wesentlich verbesserte Brandresistenz liegt darin, dass durch die Verwendung von Kunststoff-Fasern diese bei hohen Temperaturen verbrennen und als Folge davon im Beton ein fein verteiltes Kapillarnetz entsteht, durch das der entstehende Wasserdampf aus dem Beton entweichen kann. Dies verhindert ein Abplatzen und Zerstören von Betonteilen unter dem Druck von Wasserdampf, der im Innern des Betons nicht entweichen kann.

Es ist bereits bekannt, Peletten aus Steinkohleflugasche als Zuschlagsmaterial für Beton zu verwenden. Derartige Peletten werden bei etwa 1300°C gesintert und lassen sich in unterschiedlichen Korngrössen von etwa 0,5 bis 12 mm herstellen. Durch den Sinterprozess ist dieses Material feuerund brandbeständig. Durch die geringe Dichte von etwa 1400 kg/m³ ist dieses Material als Zuschlagsstoff für Leichtbeton geeignet.

Es ist ferner bekannt, im Betonbau hochfeste, korrosions- und alkalibeständige Fasern zur Verminderung von Schwindrissen, Erhöhung der Zähigkeit und der Schlagfestigkeit einzusetzen.

Im Gegensatz zum konventionellen Einsatz von Fasern im Betonbau, bei dem vor allem die Bildung von Betonrissen vermieden oder mindestens eingeschränkt werden soll, hat der Einsatz von Kunststoff-Fasern zusammen mit nicht brennbaren Steinkohleflugaschen-Körpern den Zweck, die Brandresistenz stark zu erhöhen. Diese überraschende Wirkung kommt dadurch zustande, dass im Brandfall durch die hohe Temperatur die Kunststoff-Fasern schmelzen oder verbrennen. Die Schmelztemperatur von fibirillierten Polypropylen-Fasern liegt bei etwa 160 bis 165°C und die Entzündungstemperatur bei etwa 600°C.

Durch den Schmelzvorgang, der bei Hitzeeinwirkung bspw. bei einem Brand in einem Tunnel verursacht wird, entsteht im Betonkörper ein dreidimensionales Kapillarnetz, durch das der im Innern des Betonkörper entstehende Wasserdampf in diesem Kapillarnetz ausbreiten und aus diesem Beton entweichen kann. Da relativ lange Kunststoff-Fasern von 10 - 38 mm - vorzugsweise etwa 19 mm - zum Einsatz kommen, ist die Wahrscheinlichkeit gross, dass sich im gut durchmischten Beton mehrere Kunststoff-Fasern berühren und dadurch ein mindestens über Teilbereiche zusammenhängendes Kapillarnetz entsteht, sodass der Dampfdruck nach aussen abgeleitet werden kann. Dadurch wird das bei konventionellen Betonträgern bei hohen Temperaturen gefürchtete Abplatzen von Betonteilen und in der Folge der Verlust der Festigkeit und Tragfähigkeit vermieden.

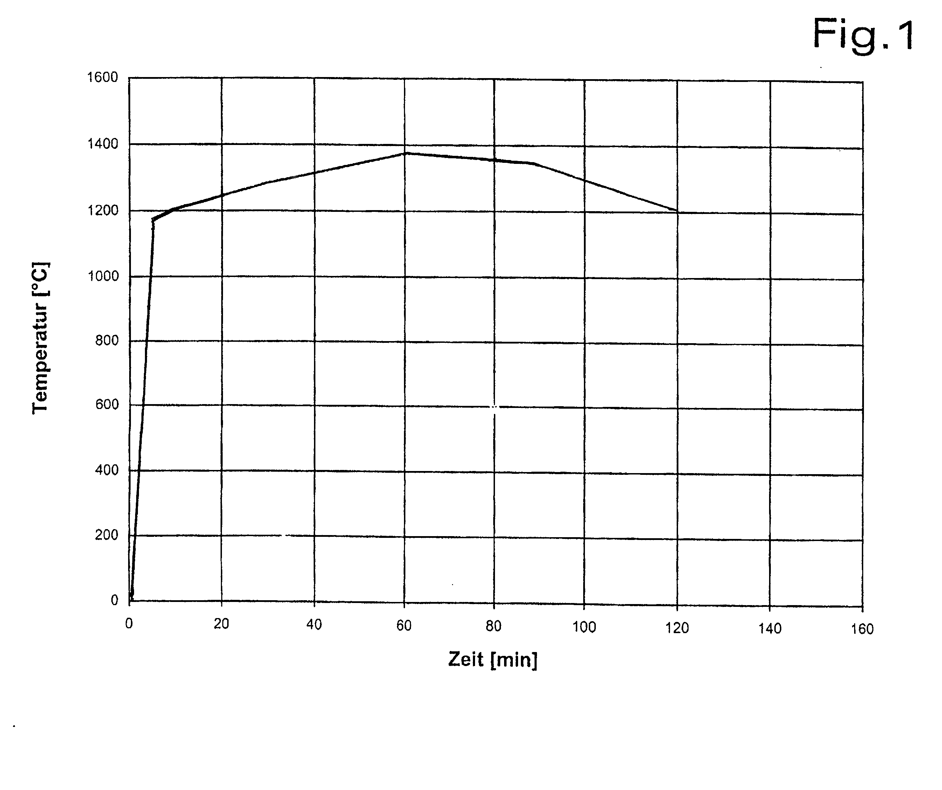

In der Figur ist ein bei einem Brand in einem Stollen aufgezeichnetes Diagramm dargestellt. Es zeigt sich, dass darin nach etwa 60 Minuten eine Temperatur von etwa 1350°C erreicht wurde. Dieser Betonprüfkörper, der aus einer erfindungsgemässen Betonmischung hergestellt worden ist, blieb auch nach 120 Minuten unbeschädigt und es ist bei ihm kein Abplatzen erfolgt. Als Prüfkörper wurden Platten mit der erfindungsgemässen Rezeptur mit den Abmessungen 1,5 m × 1,5 m × 0,15 m verwendet.

Für das Testverfahren gelangte eine Mischung mit folgender Rezeptur zur Anwendung für 1 m³ Beton:
551 kg Steinkohleflugaschen-Pelettons mit einer Korngrösse von 0,5-6 mm
418 kg Steinkohleflugaschen-Pelettons mit einer Korngrösse von 6-12 mm
400 kg Zement CEM III B 42.5 LH HS
2 resp. 4 kg Kunststoff-Polypropylen-Fasern
1 Gewichtsprozent Betonverflüssiger.

Die Variante der Rezeptur mit 4 kg Kunststoff-Fasern zeigte die gleichen Resultate, jedoch lag nach dem Brandversuch die Zugfestigkeit deutlich höher.

Als Zement eignet sich CEM III B 42.5 LH HS. Bei Zementen des Types CEM III handelt es sich um sogenannte Hochofenzemente, bei denen der Anteil der Hochofenschlacke den Anteil des Portlandzementklinkers übersteigt.

Für die Montage solcher brandresistenter Platten ist es von Vorteil, dass sie ein geringes Gewicht von nur etwa 1600 kg/m³ haben. Zudem ist auch im "kalten Zustand" die Rissgefahr durch die Beimischung von Kunststoff-Fasern stark vermindert.

Die Erfindung ist mit dem oben erläuterten Ausführungsbeispiel ausführlich dargetan. Selbstverständlich könnte die Betonmischung noch in anderen Mischverhältnissen ausgeführt sein.

## Patentansprüche

1. Betonmischung mit erhöhter Brandresistenz, enthaltend Kunststoff-Fasern und zu Festkörpern gesinterte Steinkohleflugasche, **dadurch gekennzeichnet, dass**
die Betonmischung im wesentlichen aus den Steinkohleflugaschen-Festkörpern, einem Hochofenzement, dessen Anteil an Hochofenschlacke den Anteil des Portlandzementklinkers übersteigt, den Kunststoff-Fasern und einem Betonverflüssiger besteht.

2. Betonmischung nach Anspruch 1, **dadurch gekennzeichnet, dass** die Kunststoff-Fasern fibrillierte Polypropylen-Fasern sind.

3. Betonmischung nach Anspruch 1 oder 2, **dadurch gekennzeichnet, dass** die Festkörper aus Steinkohleflugasche die Form von Peletten mit einer Korngrösse von 0,5 bis 12 mm haben, die bei cirka 1300° Celsius gesintert werden.

4. Betonmischung nach einem der vorhergehenden Ansprüche, **dadurch gekennzeichnet, dass** die Kunststoff-Fasern eine Länge von 10 bis 38 mm, vorzugsweise von etwa 19 mm und einen Schmelzpunkt zwischen 160°C und 165°C aufweisen.

5. Betonmischung nach einem der vorhergehenden Ansprüche, **dadurch gekennzeichnet, dass** die Kunststoff-Fasern einen Durchmesser von 35 bis 40 µm haben.

6. Betonmischung nach einem der vorhergehenden Ansprüche, **dadurch gekennzeichnet, dass** die Kunststoff-Fasern oberflächenvergütet sind.

7. Betonmischung nach einem der vorhergehenden Ansprüche, **dadurch gekennzeichnet, dass** die Kunststoff-Fasern gebündelt der Mischung beigegeben werden.

8. Betonmischung nach einem der vorhergehenden Ansprüche, **dadurch gekennzeichnet, dass** für ein m³ Beton folgende Anteile verwendet werden:
551 kg Steinkohleflugaschen-Peletten mit einer Korngrösse von 0,5-6 mm
418 kg Steinkohleflugaschen-Peletten mit einer Korngrösse von 6-12 mm
400 kg Zement CEM III B 42.5 LH HS
mindestens 2 kg Kunststoff-Polypropylen-Fasern
1 Gewichtprozent Betonverflüssiger.

9. Betonmischung nach Anspruch 8, **dadurch gekennzeichnet, dass** die Kunststoff-Fasern in einem Gewicht von 4 kg oder mehr beigegeben werden.

## Claims

1. Concrete mixture with increased fire resistance, containing synthetic fibres and stone coal fly-ash sintered to solidified elements, **characterized in that**
the concrete mixture essentially consists of stone coal fly-ash solidified elements, *a* blast-furnace cement, from which the part of the blast-furnace slag exceeds the part of the Portland cement clinker, the synthetic fibres and a concrete liquefier.

2. Concrete mixture according to claim 1, **characterized in that** the synthetic fibres are fibrillated Polypropylene-filaments.

3. Concrete mixture according to claim 1 or 2, **characterized in that** the solidified elements of stone coal fly-ash are shaped of pellets with a grain size of 0,5 to 12 mm, which are sintered by a temperature of approximately 1300° Celsius.

4. Concrete mixture according to any one of the preceding claims, **characterized in that** the synthetic fibres having a length of 10 to 38 mm, preferably of approximately 19 mm and a melting point between 160°C and 165°C.

5. Concrete mixture according to any one of the preceding claims, **characterized in that** the synthetic fibres having a diameter of 35 to 40 µm.

6. Concrete mixture according to any one of the preceding claims, **characterized in that** the synthetic fibres are surface refined.

7. Concrete mixture according to any one of the preceding claims, **characterized in that** the synthetic fibres are added bundled to the mixture.

8. Concrete mixture according to any one of the preceding claims, **characterized in that** the following components are used per m³ concrete:
551 kg stone coal fly-ash-pellets with a grain size of 0,5-6 mm
418 kg stone coal fly-ash-pellets with a grain size of 6-12 mm
400 kg concrete CEM III B 42.5 LH HS
at least 2 kg synthetic-Polypropylene-fibres
1 percent of weight concrete liquefier.

9. Concrete mixture according to claim 8, **characterized in that** the synthetic fibres are added in a weight of 4 kg or more.

## Revendications

1. Mélange de béton de grande résistance à l'incendie, contenant des fibres de matière synthétique et des cendres volantes de charbon frittées sous forme de corps solides, **caractérisé en ce que**
le mélange de béton se compose essentiellement des corps solides de cendres volantes de charbon, d'un ciment de haut fourneau dont le pourcentage en laitier de haut fourneau est supérieur au pourcentage en clinber de ciment Portland, des fibres de matière synthétique et d'un plastifiant de béton.

2. Mélange de béton selon la revendication 1, **caractérisé en ce que** les fibres de matière synthétique sont des fibres de polypropylène fibrillées.

3. Mélange de béton selon la revendication 1 ou 2, **caractérisé en ce que** les corps solides de cendres volantes de charbon se présentent sous la forme de boulettes d'un calibre compris entre 0,5 et 12 mm, qui sont frittés à environ 1300°C.

4. Mélange de béton selon l'une des revendications précédentes, **caractérisé en ce que** les fibres de matière synthétique ont une longueur comprise entre 10 et 38 mm, avantageusement de 19mm environ, et un point de fusion compris entre 160°C et 165°C.

5. Mélange de béton selon l'une des revendications précédentes, **caractérisé en ce que** les fibres de matière synthétique ont un diamètre compris entre 35 et 40 µm.

6. Mélange de béton selon l'une des revendications précédentes, **caractérisé en ce que** les fibres de matière synthétique sont soumis un traitement antireflet.

7. Mélange de béton selon l'une des revendications précédentes, **caractérisé en ce que** les fibres de matière synthétique sont ajoutées au mélange en botte.

8. Mélange de béton selon l'une des revendications précédentes, **caractérisé en ce qu'**il est utilisé pour 1 m³ de béton les pourcentages suivants :
551 kg de boulettes de cendres volantes de charbon de calibre compris entre 0,5 et 6 mm,
418 kg de boulettes de cendres volantes de charbon de calibre compris entre 6 et 12 mm,
400 kg de ciment CEM III B 42,5 LH HS,
au moins 2 kg de fibres de matière synthétique polypropylène
1 % en poids de plastifiant de béton.

9. Mélange de béton selon la revendication 8, **caractérisé en ce qu'**il est ajouté 4 kg, ou plus, de fibres de matière synthétique.
